# EUROPEAN PATENT APPLICATION

(11) **EP 4 797 468 A1**
(43) Date of publication of application: **26.08.2026**
(21) Application number: 24890378.3
(22) Date of filing: 10.10.2024
(51) Int. Cl.: H01S 3/067

(54) **OPTICAL AMPLIFIER APPARATUS, AND RELATED SYSTEM AND METHOD**

(30) Priority: 15.11.2023 CN 202311525223
(71) Applicant: HUAWEI TECHNOLOGIES CO., LTD., Shenzhen 518129 (CN)
(72) Inventor: CHEN, Hao, Shenzhen, Guangdong 518129 (CN); CUI, Jian, Shenzhen, Guangdong 518129 (CN); GAO, Xinxia, Shenzhen, Guangdong 518129 (CN); CAO, Shiyi, Shenzhen, Guangdong 518129 (CN); LIU, Yehui, Shenzhen, Guangdong 518129 (CN)
(74) Representative: Maiwald GmbH
(86) International application number: PCT/CN2024/123797
(87) International publication number: WO 2025/103020

(57) **Abstract**

Embodiments of this application disclose an optical amplification apparatus and a related system and method. The optical amplification apparatus includes a fiber isolator, a pump light source, a beam combiner, and an EYDF. A large amount of pump light in the EYDF cannot be completely absorbed by ytterbium ions, and ytterbium-band ASE light generated by the ytterbium ions is further amplified by the pump light. As a result, the ytterbium-band ASE light limits effective amplification of the pump light on signal light. In embodiments of this application, the fiber isolator in the optical amplification apparatus is reconstructed, so that the fiber isolator can reflect the ytterbium-band ASE light as an auxiliary signal back to the EYDF, and stimulated amplification of the auxiliary signal and absorption thereof by the EYDF again can effectively suppress generation of the ytterbium-band ASE light by the EYDF, thereby avoiding self-excited oscillation and self-pulsation of the ytterbium-band ASE light, and improving pump conversion efficiency and stability of output power. In addition, the optical amplification apparatus provided in embodiments of this application can effectively suppress the generation of the ytterbium-band ASE light by the EYDF without adding an additional device. This helps reduce costs and power consumption.

## Description

This application claims priority to Chinese Patent Application No. 202311525223.5, filed with the China National Intellectual Property Administration on November 15, 2023 and entitled "OPTICAL AMPLIFICATION APPARATUS AND RELATED SYSTEM AND METHOD", which is incorporated herein by reference in its entirety.

### TECHNICAL FIELD

This application relates to the field of optical transmission, and in particular, to an optical amplification apparatus and a related system and method.

### BACKGROUND

With rapid development of application scenarios such as optical communication, high-power industrial lasers, and lidars, high-power amplification of 1.5-µm band lasers has attracted great attention in the industry. An erbium-doped fiber amplifier (Erbium-doped fiber amplifier, EDFA) is a main gain medium for power amplification of 1.5-µm input light. However, due to a small absorption cross section and a low doping concentration of erbium ions, it is difficult for the EDFA to implement high-power amplification of the input light. To resolve the foregoing problem, currently, a main manner is to dope a fiber core of an erbium-doped fiber with a specific concentration of ytterbium ions, and use a double-cladding optical fiber structure, so that a low-cost high-power multi-mode pump may be used as an excitation source of a gain optical fiber. Combined with a large absorption cross section and a high population inversion rate of the ytterbium ions for pump light, this implements high-efficiency amplification of the erbium ions. In addition, due to doping with the ytterbium ions, the ytterbium ions surrounding the erbium ions can effectively avoid erbium ion clusters, to further improve an erbium ion doping concentration, and implement high-power and high-efficiency amplification of input signal light.

However, when pump power is further increased to obtain higher amplification power, a large amount of pump light in an erbium-ytterbium co-doped fiber (Erbium-Ytterbium co-doped fiber, EYDF) cannot be completely absorbed by the ytterbium ions, and amplified spontaneous emission (Amplified spontaneous emission, ASE) generated by the ytterbium ions is further amplified by the gain optical fiber. As a result, 1-µm band ASE limits effective amplification of the pump light on 1.5-µm band signal light. Because the high-power 1-µm band ASE is prone to self-pulsation and self-excited oscillation, optical components in an optical amplifier link are easily damaged. Therefore, to implement amplification of the 1.5-µm band high-power signal light, an appropriate technology is urgently required to suppress the ASE generated by the ytterbium ions in the 1-µm band.

### SUMMARY

Embodiments of this application provide an optical amplification apparatus and a related system and method, to effectively suppress generation of ytterbium-band ASE light by an EYDF, thereby avoiding self-excited oscillation and self-pulsation of the ytterbium-band ASE light, and improving pump conversion efficiency and stability of output power.

According to a first aspect, an embodiment of this application provides an optical amplification apparatus. The optical amplification apparatus includes a first fiber isolator, a first pump light source, a first beam combiner, and a first erbium-ytterbium co-doped fiber (Erbium-Ytterbium co-doped fiber, EYDF). The first fiber isolator is configured to transmit signal light from a signal light source to the first EYDF. The first pump light source is configured to output first pump light. The first beam combiner is configured to couple the first pump light to the first EYDF. A large amount of first pump light in the first EYDF cannot be completely absorbed by ytterbium ions, and first ytterbium-band amplified spontaneous emission (Amplified spontaneous emission, ASE) light generated by the ytterbium ions is further amplified by the first pump light. As a result, the first ytterbium-band ASE light limits effective amplification of the first pump light on the signal light. The first ytterbium-band ASE light may also be referred to as 1-µm band ASE light, and the first ytterbium-band ASE light is transmitted in a direction the same as and a direction opposite to a transmission direction of the signal light. In this embodiment of this application, the first fiber isolator is reconstructed, and the first fiber isolator can reflect the first ytterbium-band ASE light as an auxiliary signal back to the first EYDF.

In this implementation, the first fiber isolator can reflect the first ytterbium-band ASE light as the auxiliary signal back to the first EYDF, and stimulated amplification of the auxiliary signal and absorption thereof by the first EYDF again can effectively suppress generation of the ytterbium-band ASE light by the first EYDF, thereby avoiding self-excited oscillation and self-pulsation of the ytterbium-band ASE light, and improving pump conversion efficiency and stability of output power. In addition, the optical amplification apparatus provided in embodiments of this application can effectively suppress the generation of the ytterbium-band ASE light by the first EYDF without adding an additional device. This helps reduce costs and power consumption.

In some possible implementations, the first fiber isolator includes a first collimator, an isolator, a second collimator, and a reflection element. The first collimator and the second collimator are respectively located at two ends of the first fiber isolator, the first collimator is close to the signal light source, the second collimator is close to the first EYDF, and the reflection element is located between the isolator and the second collimator. The reflection element is configured to reflect the first ytterbium-band ASE light back to the first EYDF. In this implementation, a specific implementation of the fiber isolator is provided, where the reflection element is added on the basis of an original structure of the fiber isolator, and the implementation is simple and low-cost.

In some possible implementations, the reflection element is a reflection film located on an end surface of the second collimator, or the reflection element is a reflection film located on an end surface of the isolator. It should be understood that plating the reflection film introduces a lower insertion loss, and has better practical effect.

In some possible implementations, the reflection element is a dielectric mirror located between the isolator and the second collimator, extending implementations of this embodiment of this application.

In some possible implementations, the reflection element is configured to: reflect light whose wavelength is less than a wavelength of the signal light, and transmit light whose wavelength is greater than or equal to the wavelength of the signal light, so that most signal light transmission scenarios can be adapted to.

In some possible implementations, the first beam combiner is located between the first fiber isolator and the first EYDF, and a transmission direction of the first pump light is the same as the transmission direction of the signal light. In other words, embodiments of this application can adapt to an application scenario of forward pumping, and have good practical effect.

In some possible implementations, first pump light that is not completely absorbed by the first EYDF is reflected back to the first EYDF through film coating on a side that is of the first EYDF and that is away from the first beam combiner. In other words, the first pump light that is not completely absorbed by the first EYDF is reflected back by the dielectric film, so that the first pump light is absorbed again, to improve pumping efficiency.

In some possible implementations, the first beam combiner is connected to a side that is of the first EYDF and that is away from the first fiber isolator, and a transmission direction of the first pump light is opposite to the transmission direction of the signal light. In other words, embodiments of this application can further adapt to an application scenario of backward pumping, and have good adaptability.

In some possible implementations, the first fiber isolator is further configured to suppress transmission of the first pump light to the signal light source, to effectively protect the signal light source.

In some possible implementations, the optical amplification apparatus further includes a second fiber isolator, a second pump light source, a second beam combiner, and a second EYDF, and the signal light from the first EYDF is transmitted to the second EYDF through the second fiber isolator. The second pump light source is configured to output second pump light. The second beam combiner is configured to couple the second pump light to the second EYDF, where second ASE light generated in the second EYDF is transmitted in the directions that the same as and opposite to the transmission direction of the signal light. The second fiber isolator is configured to reflect the second ytterbium-band ASE light back to the second EYDF. In other words, in this embodiment of this application, higher-power optical amplification may be further implemented by using a cascading design.

In some possible implementations, the first EYDF includes an outer cladding, an inner cladding, and a fiber core, where the outer cladding wraps the inner cladding, the inner cladding wraps the fiber core, the signal light and the first ytterbium-band ASE light are transmitted in the fiber core, and the first pump light is transmitted in the inner cladding.

In some possible implementations, the wavelength of the signal light is greater than a wavelength of the first ytterbium-band ASE light, and the wavelength of the first ytterbium-band ASE light is greater than a wavelength of the first pump light.

According to a second aspect, an embodiment of this application provides an optical amplification system. The optical amplification system includes a signal light source, a first lens group, and the optical amplification apparatus described in any implementation of the first aspect. Specifically, the signal light source is configured to output signal light. The optical amplification apparatus is configured to amplify the signal light. The first lens group is configured to collimate signal light from an EYDF in the optical amplification apparatus.

In some possible implementations, the optical amplification system further includes a second lens group, and processing performed by the second lens group on signal light passing through the first lens group includes but is not limited to beam expansion, beam splitting, and/or beam combination.

According to a third aspect, an embodiment of this application provides a radar system. The radar system includes a signal light source, a light receiving apparatus, and the optical amplification apparatus described in any implementation of the first aspect. Specifically, the signal light source is configured to output signal light. The optical amplification apparatus is configured to amplify the signal light and transmit the signal light to a target object. The light receiving apparatus is configured to receive signal light reflected by the target object.

According to a fourth aspect, an embodiment of this application further provides an optical amplification method. The optical amplification method is applied to an optical amplification apparatus, and the optical amplification apparatus includes a first fiber isolator, a first pump light source, a first beam combiner, and a first EYDF. The optical amplification method includes: transmitting signal light from a signal light source to the first EYDF through the first fiber isolator; outputting first pump light through the first pump light source; coupling the first pump light to the first EYDF through the first beam combiner, where first ytterbium-band amplified spontaneous emission ASE light generated in the first EYDF is transmitted in a direction the same as and a direction opposite to a transmission direction of the signal light; and reflecting the first ytterbium-band ASE light back to the first EYDF through the first fiber isolator.

In this implementation, the first fiber isolator can reflect the first ytterbium-band ASE light as the auxiliary signal back to the first EYDF, and stimulated amplification of the auxiliary signal and absorption thereof by the first EYDF again can effectively suppress generation of the ytterbium-band ASE light by the first EYDF, thereby avoiding self-excited oscillation and self-pulsation of the ytterbium-band ASE light, and improving pump conversion efficiency and stability of output power. In addition, the optical amplification apparatus provided in embodiments of this application can effectively suppress the generation of the ytterbium-band ASE light by the first EYDF without adding an additional device. This helps reduce costs and power consumption.

In some possible implementations, the first fiber isolator includes a first collimator, an isolator, a second collimator, and a reflection element, the first collimator and the second collimator are respectively located at two ends of the first fiber isolator, the first collimator is close to the signal light source, the second collimator is close to the first EYDF, and the reflection element is located between the isolator and the second collimator. Reflecting the first ytterbium-band ASE light back to the first EYDF through the first fiber isolator includes: reflecting the first ytterbium-band ASE light back to the first EYDF through the reflection element. In this implementation, a specific implementation of the fiber isolator is provided, where the reflection element is added on the basis of an original structure of the fiber isolator, and the implementation is simple and low-cost.

In some possible implementations, the reflection element is a reflection film located on an end surface of the second collimator, or the reflection element is a reflection film located on an end surface of the isolator. It should be understood that plating the reflection film introduces a lower insertion loss, and has better practical effect.

In some possible implementations, the reflection element is a dielectric mirror located between the isolator and the second collimator, extending implementations of this embodiment of this application.

In some possible implementations, the reflection element is configured to: reflect light whose wavelength is less than a wavelength of the signal light, and transmit light whose wavelength is greater than or equal to the wavelength of the signal light, so that most signal light transmission scenarios can be adapted to.

In some possible implementations, the first beam combiner is located between the first fiber isolator and the first EYDF, and a transmission direction of the first pump light is the same as the transmission direction of the signal light. In other words, embodiments of this application can adapt to an application scenario of forward pumping, and have good practical effect.

First pump light that is not completely absorbed by the first EYDF is reflected back to the first EYDF through film coating on a side that is of the first EYDF and that is away from the first beam combiner. In other words, the first pump light that is not completely absorbed by the first EYDF is reflected back by the dielectric film, so that the first pump light is absorbed again, to improve pumping efficiency.

In some possible implementations, the first beam combiner is connected to a side that is of the first EYDF and that is away from the first fiber isolator, and a transmission direction of the first pump light is opposite to the transmission direction of the signal light. In other words, embodiments of this application can further adapt to an application scenario of backward pumping, and have good adaptability.

In some possible implementations, the method further includes: suppressing, through the first fiber isolator, transmission of the first pump light to the signal light source, to effectively protect the signal light source.

In some possible implementations, the optical amplification apparatus further includes a second fiber isolator, a second pump light source, a second beam combiner, and a second EYDF, and the signal light from the first EYDF is transmitted to the second EYDF through the second fiber isolator. The method further includes: outputting second pump light through the second pump light source; coupling the second pump light to the second EYDF through the second beam combiner, where second ASE light generated in the second EYDF is transmitted in the direction the same as and the direction opposite to the transmission direction of the signal light; and reflecting the second ytterbium-band ASE light back to the second EYDF through the second fiber isolator. In other words, in this embodiment of this application, higher-power optical amplification may be further implemented by using a cascading design.

In some possible implementations, the first EYDF includes an outer cladding, an inner cladding, and a fiber core, where the outer cladding wraps the inner cladding, the inner cladding wraps the fiber core, the signal light and the first ytterbium-band ASE light are transmitted in the fiber core, and the first pump light is transmitted in the inner cladding.

In some possible implementations, the wavelength of the signal light is greater than a wavelength of the first ytterbium-band ASE light, and the wavelength of the first ytterbium-band ASE light is greater than a wavelength of the first pump light.

In this embodiment of this application, the beam combiner couples the signal light and the pump light to the EYDF, and the ytterbium-band ASE light generated in the EYDF is transmitted in the directions that the same as and opposite to the transmission direction of the signal light. In embodiments of this application, the fiber isolator in the optical amplification apparatus is reconstructed, so that the fiber isolator can reflect the ytterbium-band ASE light as an auxiliary signal back to the EYDF and stimulated amplification of the auxiliary signal and absorption thereof by the EYDF again can effectively suppress generation of the ytterbium-band ASE light by the EYDF, thereby avoiding self-excited oscillation and self-pulsation of the ytterbium-band ASE light, and improving pump conversion efficiency and stability of output power. In addition, the optical amplification apparatus provided in embodiments of this application can effectively suppress the generation of the ytterbium-band ASE light by the EYDF without adding an additional device. This helps reduce costs and power consumption.

### BRIEF DESCRIPTION OF DRAWINGS

FIG. 1 is a diagram of a first structure of an optical amplification apparatus according to an embodiment of this application;
FIG. 2 is a diagram of a first structure of a fiber isolator according to an embodiment of this application;
FIG. 3 is a diagram of a second structure of a fiber isolator according to an embodiment of this application;
FIG. 4 is a diagram of a third structure of a fiber isolator according to an embodiment of this application;
FIG. 5 is a diagram of a structure of an EYDF according to an embodiment of this application;
FIG. 6 is a diagram of a second structure of an optical amplification apparatus according to an embodiment of this application;
FIG. 7 is a diagram of a third structure of an optical amplification apparatus according to an embodiment of this application;
FIG. 8 is a diagram of an embodiment of an optical amplification method according to an embodiment of this application;
FIG. 9 is a diagram of an optical amplification system according to an embodiment of this application; and
FIG. 10 is a diagram of a radar system according to an embodiment of this application.

### DESCRIPTION OF EMBODIMENTS

Embodiments of this application provide an optical amplification apparatus and a related system and method, to effectively suppress ytterbium-band amplified spontaneous emission (Amplified spontaneous emission, ASE) light generated by an erbium-ytterbium co-doped fiber (Erbium-Ytterbium co-doped fiber, EYDF), thereby avoiding self-excited oscillation and self-pulsation of the ytterbium-band ASE light, and improving pump conversion efficiency and stability of output power. It should be understood that the optical amplification apparatus provided in embodiments of this application may also be referred to as an erbium-ytterbium co-doped fiber amplifier (Erbium-Ytterbium co-doped fiber amplifier, EYDFA). For example, the EYDFA may be used in scenarios such as space optical communication and an optical fiber communication link. For another example, the EYDFA may be used in a vehicle-mounted lidar to implement high-efficiency amplification of pulse light. For another example, the EYDFA may be used as an optical amplifier in industrial laser processing, to greatly increase output power of an input laser.

It should be noted that in the specification, claims, and the foregoing accompanying drawings of this application, the terms "first", "second", and the like are intended to distinguish between similar objects but do not limit a specific order or sequence. It should be understood that the foregoing terms are interchangeable in proper cases, so that embodiments described in this application can be implemented in a sequence other than the content described in this application. In addition, the terms "include", "have", and any other variant thereof are intended to cover a non-exclusive inclusion. For example, a process, a method, a system, a product, or a device that includes a series of steps or units is not necessarily limited to those expressly enumerated steps or units, but may include other steps or units not expressly enumerated or inherent to such a process, method, product, or device.

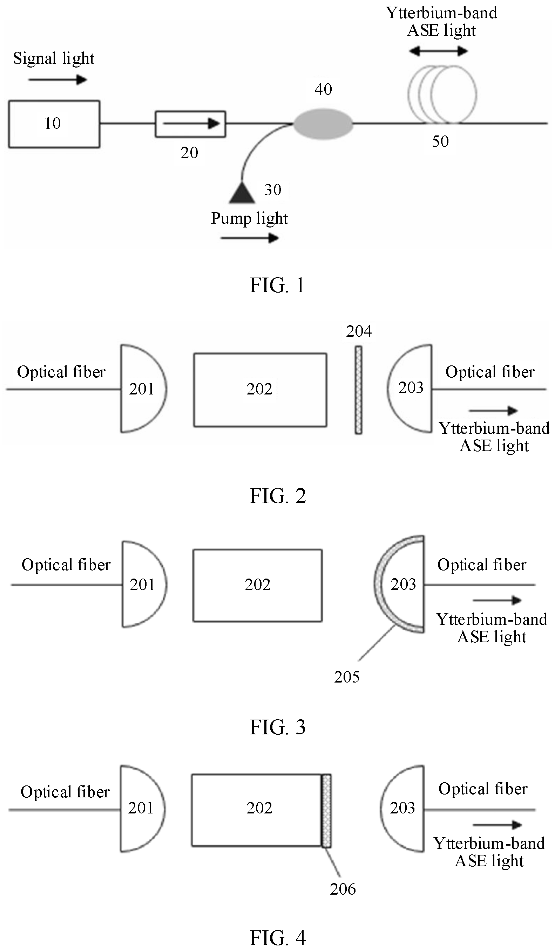

FIG. 1 is a diagram of a first structure of an optical amplification apparatus according to an embodiment of this application. As shown in FIG. 1, a signal light source 10 is configured to output signal light. The optical amplification apparatus includes a fiber isolator 20, a pump light source 30, a beam combiner 40, and an EYDF 50. The signal light is transmitted to the beam combiner 40 through the fiber isolator 20. The fiber isolator 20 is configured to isolate echo reflected light generated during transmission of the signal light, to ensure that the signal light has a single transmission direction. The pump light source 30 is configured to output pump light to the beam combiner 40. The beam combiner 40 is configured to couple the signal light and the pump light to the EYDF 50. The signal light and the pump light in the EYDF 50 are transmitted in a same direction, and the signal light is amplified through the EYDF 50. It should be understood that, during actual application, the signal light source 10 is a signal light emitting apparatus, for example, an optical module. The optical amplification apparatus may include the signal light source 10, or may not include the signal light source 10. This is not specifically limited herein.

The EYDF 50 uses a double-cladding structure. To be specific, the EYDF 50 includes an outer cladding, an inner cladding, and a fiber core. The outer cladding wraps the inner cladding, the inner cladding wraps the fiber core, and the signal light is transmitted in the fiber core. The pump light is injected into the inner cladding, a refractive index of the inner cladding is greater than a refractive index of the outer cladding, the outer cladding provides a total reflection condition for the pump light, and the pump light is transmitted in the inner cladding through reflection. In an example, single-mode optical fibers may be used to connect the signal light source 10 to the fiber isolator 20 and the fiber isolator to the beam combiner 40, and a multi-mode optical fiber may be used to connect the pump light source 30 to the beam combiner 40. A fiber core of the single-mode optical fiber may be interconnected with the fiber core of the EYDF 50, and the signal light is transmitted to the fiber core of the EYDF 50 through the fiber core of the single-mode optical fiber.

It should be understood that a large amount of pump light in the EYDF 50 cannot be completely absorbed by ytterbium ions, and ytterbium-band ASE light generated by the ytterbium ions is further amplified by the pump light. As a result, the ytterbium-band ASE light limits effective amplification of the pump light on the signal light. The ytterbium-band ASE light may also be referred to as 1-µm band ASE light, and the ytterbium-band ASE light is transmitted in a direction the same as and a direction opposite to the transmission direction of the signal light. In embodiments of this application, the fiber isolator 20 in the optical amplification apparatus is reconstructed, so that the fiber isolator 20 can reflect the ytterbium-band ASE light as an auxiliary signal back to the EYDF 50, and stimulated amplification of the auxiliary signal and absorption thereof by the EYDF again can effectively suppress generation of the ytterbium-band ASE light by the EYDF, thereby avoiding self-excited oscillation and self-pulsation of the ytterbium-band ASE light, and improving pump conversion efficiency and stability of output power. The following describes several possible structures of the fiber isolator 20.

FIG. 2 is a diagram of a first structure of the fiber isolator according to an embodiment of this application. As shown in FIG. 2, the fiber isolator 20 includes a first collimator 201, an isolator 202, a second collimator 203, and a dielectric mirror 204. The first collimator 201 and the second collimator 203 are respectively located at two ends of the fiber isolator 20, and the isolator 202 is located between the first collimator 201 and the second collimator 203. The first collimator 201 is configured to collimate signal light divergent from an optical fiber, to obtain signal light that is transmitted in parallel in space, and the second collimator 203 is configured to couple signal light that passes through the isolator 202 to the optical fiber. The dielectric mirror 204 is located between the isolator 202 and the second collimator 203, and the dielectric mirror 204 is configured to transmit the signal light and reflect the ytterbium-band ASE light back to the EYDF 50.

FIG. 3 is a diagram of a second structure of the fiber isolator according to an embodiment of this application. A difference from the structure shown in FIG. 2 lies in that, in the structure shown in FIG. 3, a reflection film 205 is plated on an end surface that is of the second collimator 203 and that is close to the isolator 202. The reflection film 205 has a same function as the dielectric mirror 204, and is configured to transmit the signal light and reflect the ytterbium-band ASE light back to the EYDF 50.

FIG. 4 is a diagram of a third structure of the fiber isolator according to an embodiment of this application. A difference from the structures shown in FIG. 2 and FIG. 3 lies in that, in the structure shown in FIG. 4, a reflection film 206 is plated on an end surface that is of the isolator 202 and that is close to the second collimator 203. The reflection film 206 has a same function as the dielectric mirror 204, and is configured to transmit the signal light and reflect the ytterbium-band ASE light back to the EYDF 50.

It should be understood that, in the fiber isolator shown in FIG. 3 and FIG. 4, compared with adding the dielectric mirror, plating the reflection film introduces a lower insertion loss. It should be noted that, generally, a wavelength of the signal light is greater than a wavelength of the ytterbium-band ASE light, and the wavelength of the ytterbium-band ASE light is greater than a wavelength of the pump light. For example, the signal light is in a 1.5-µm band, the ytterbium-band ASE light is in a 1-µm band, and the wavelength of the pump light is less than or equal to 980 nm, with typical values including 915 nm, 940 nm, and 976 nm. In embodiments of this application, the dielectric mirror 204, the reflection film 205, and the reflection film 206 may be designed based on the wavelength of the signal light and the wavelength of the ytterbium-band ASE light in actual application. This is not limited herein. For example, the dielectric mirror 204, the reflection film 205, and the reflection film 206 reflect light whose wavelength is less than 1.2 µm, with a reflectivity ranging from 10% to 99.9%.

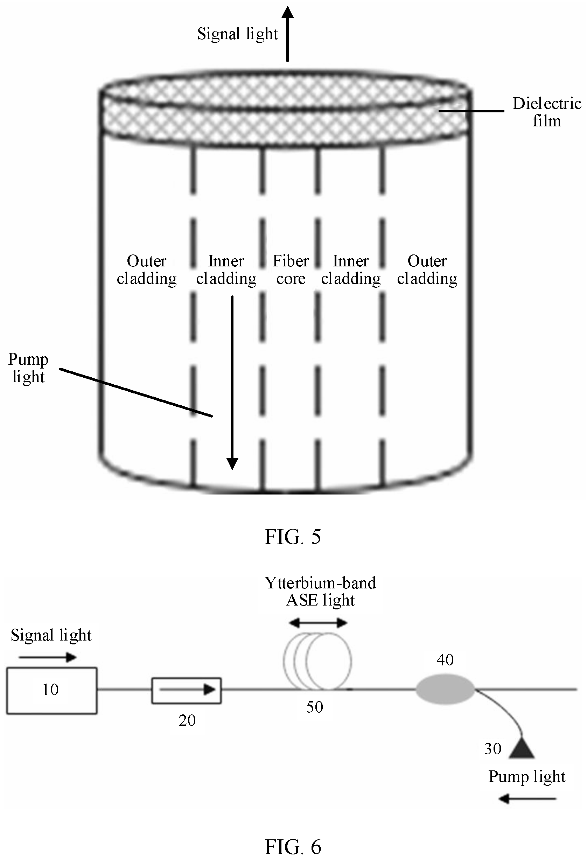

FIG. 5 is a diagram of a structure of the EYDF according to an embodiment of this application. The fiber isolator shown in FIG. 1 is used as an example. A dielectric film may be plated on an end surface on a side that is of the EYDF 50 and that is away from the beam combiner 40, and the dielectric film is configured to transmit the signal light and reflect the pump light. For example, the dielectric film may be specifically a dichroic mirror. In other words, pump light that is not completely absorbed by the EYDF 50 is reflected back by the dielectric film, so that the pump light is absorbed again, to improve pumping efficiency. For example, the dielectric film may reflect pump light in a wavelength range of 915 nm to 980 nm. It should be understood that, in some possible scenarios, one end that is of the EYDF 50 and that is away from the beam combiner 40 is connected to a passive optical fiber, or a dielectric film may be plated on an end surface of the connected passive optical fiber to implement a similar function, or another reflection element that has a type function may be disposed on a side that is of the EYDF 50 and that is away from the beam combiner 40.

It should be understood that an implementation of forward pumping is used in FIG. 1. To be specific, both the signal light source 10 and the pump light source 30 are located at a front end of the EYDF 50, and the transmission direction of the signal light is the same as the transmission direction of the pump light. In addition, an implementation of backward pumping may alternatively be used in embodiments of this application, which is described below.

FIG. 6 is a diagram of a second structure of the optical amplification apparatus according to an embodiment of this application. As shown in FIG. 6, the beam combiner 40 is connected to a side that is of the EYDF 50 and that is away from the fiber isolator 20, and the transmission direction of the pump light is opposite to the transmission direction of the signal light. In this scenario, the fiber isolator 20 can also implement functions of transmitting the signal light and reflecting the ytterbium-band ASE light. In addition, the fiber isolator 20 may further suppress transmission of the pump light to the signal light source 10. In the optical amplification apparatus shown in FIG. 6, the fiber isolator 20 may also use any one of the foregoing implementations shown in FIG. 2 to FIG. 4. Details are not described herein again.

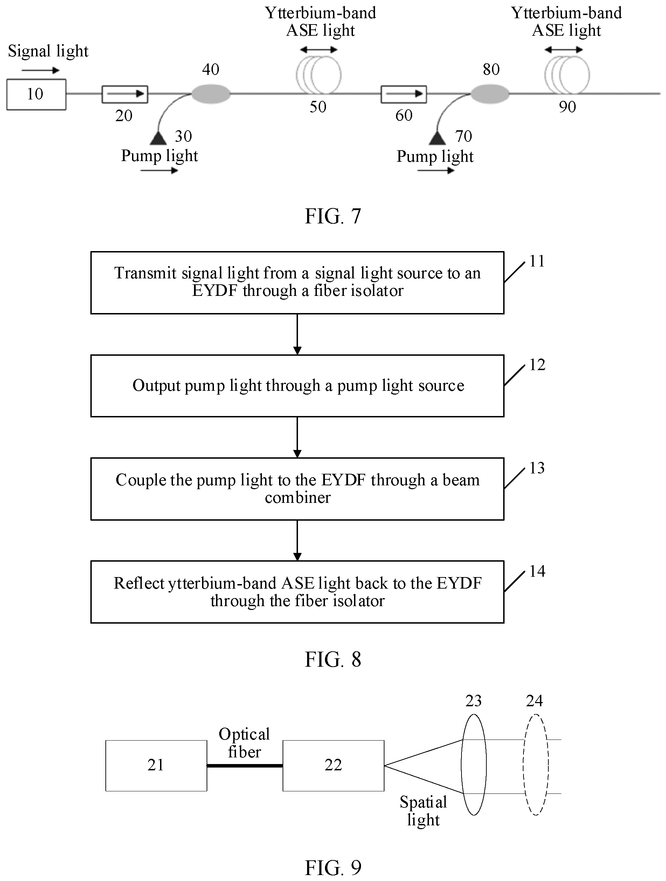

FIG. 7 is a diagram of a third structure of the optical amplification apparatus according to an embodiment of this application. As shown in FIG. 7, based on the optical amplification apparatus shown in FIG. 1, higher-power optical amplification may be further implemented in a cascading design. In an example, the optical amplification apparatus further includes a fiber isolator 60, a pump light source 70, a beam combiner 80, and an EYDF 90. A back end of the EYDF 50 is connected to the fiber isolator 60, the fiber isolator 60 is connected to the EYDF 90 through the beam combiner 80, and the beam combiner 80 is configured to couple, to the EYDF 90, pump light output by the pump light source 70. The fiber isolator 60 uses a design similar to that of the fiber isolator 20, and the fiber isolator 60 may reflect ytterbium-band ASE light from the EYDF 90 back to the EYDF 90. A dielectric film may also be plated on an end surface on a side that is of the EYDF 90 and that is away from the beam combiner 80. The dielectric film is configured to transmit the signal light and reflect the pump light. Pump light that is not completely absorbed by the EYDF 90 is reflected back by the dielectric film, so that the pump light is absorbed again, to improve pumping efficiency. For details, refer to the design shown in FIG. 5. It should be understood that a cascading design similar to that shown in FIG. 7 may also be used based on the optical amplification apparatus shown in FIG. 6. Details are not described herein again.

It can be learned from the foregoing descriptions that, in embodiments of this application, the fiber isolator in the optical amplification apparatus is reconstructed, so that the fiber isolator can reflect the ytterbium-band ASE light as an auxiliary signal back to the EYDF and stimulated amplification of the auxiliary signal and absorption thereof by the EYDF again effectively suppress generation of the ytterbium-band ASE light by the EYDF, thereby avoiding self-excited oscillation and self-pulsation of the ytterbium-band ASE light, and improving pump conversion efficiency and stability of output power. In addition, the optical amplification apparatus provided in embodiments of this application can effectively suppress the generation of the ytterbium-band ASE light by the EYDF without adding an additional device. This helps reduce costs and power consumption.

The following describes the optical amplification method provided in embodiments of this application.

FIG. 8 is a diagram of an embodiment of the optical amplification method according to an embodiment of this application. It should be noted that the optical amplification method is implemented based on the optical amplification apparatus described above. For descriptions of the optical amplification apparatus, refer to the related descriptions in the foregoing embodiments. Details are not described herein again. In this example, the optical amplification method includes the following steps.

11: Transmit signal light from a signal light source to an EYDF through a fiber isolator.

The fiber isolator isolates echo reflected light generated during transmission of the signal light, to ensure that the signal light has a single transmission direction. In the forward pumping scenario shown in FIG. 1, the signal light that passes through the fiber isolator needs to be transmitted to a fiber core of the EYDF through a beam combiner. In the backward pumping scenario shown in FIG. 6, the signal light that passes through the fiber isolator is directly transmitted to a fiber core of the EYDF.

12: Output pump light through a pump light source.

13: Couple the pump light to the EYDF through the beam combiner.

Specifically, the EYDF uses a double-cladding structure. The beam combiner may couple the pump light to an inner cladding of the EYDF, and the pump light is transmitted in the inner cladding through reflection.

14: Reflect ytterbium-band ASE light back to the EYDF through the fiber isolator.

A large amount of pump light in the EYDF cannot be completely absorbed by ytterbium ions, and the ytterbium-band ASE light generated by the ytterbium ions is further amplified by the pump light. As a result, the ytterbium-band ASE light limits effective amplification of the pump light on the signal light. The ytterbium-band ASE light is transmitted in a direction the same as and a direction opposite to the transmission direction of the signal light. The fiber isolator can reflect the ytterbium-band ASE light as an auxiliary signal back to the EYDF and stimulated amplification of the auxiliary signal and absorption thereof by the EYDF again effectively suppress generation of the ytterbium-band ASE light by the EYDF, thereby avoiding self-excited oscillation and self-pulsation of the ytterbium-band ASE light, and improving pump conversion efficiency and stability of output power.

The following describes a possible application scenario of the optical amplification apparatus.

FIG. 9 is a diagram of an optical amplification system according to an embodiment of this application. As shown in FIG. 9, the optical amplification system includes a signal light source 21, an optical amplification apparatus 22, and a first lens group 23. The optical amplification apparatus 22 may be the optical amplification apparatus described in any one of the foregoing embodiments. Specifically, the optical amplification apparatus 22 amplifies signal light output by the signal light source 21, and amplified signal light is transmitted to the first lens group 23 through an EYDF in the optical amplification apparatus 22. The first lens group 23 collimates the signal light divergent from the EYDF, to obtain signal light that is transmitted in parallel in space. Optionally, the optical amplification system further includes a second lens group 24. Processing performed by the second lens group 24 based on an actual requirement on the signal light that is transmitted in parallel in space includes but is not limited to beam expansion, beam splitting, beam combination, and the like.

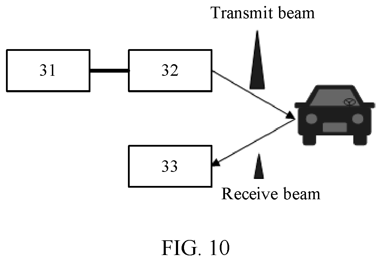

FIG. 10 is a diagram of a radar system according to an embodiment of this application. As shown in FIG. 10, the radar system includes a signal light source 31, an optical amplification apparatus 32, and a light receiving apparatus 33. The optical amplification apparatus 32 may be the optical amplification apparatus described in any one of the foregoing embodiments. Specifically, the optical amplification apparatus 32 amplifies signal light output by the signal light source 31, and transmits amplified signal light to a target object. The light receiving apparatus 33 receives a light beam reflected by the target object. The beam receiving apparatus may process the received beam to calculate time of flight of the beam, to implement a radar ranging function. It should be understood that the signal light source 31 may be specifically a pulse signal source. In a possible scenario, the signal light source 31 and the optical amplification apparatus 32 may alternatively be integrated together.

It should be noted that the foregoing embodiments are merely used to describe technical solutions of this application, but not to limit the technical solutions. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. An optical amplification apparatus, comprising a first fiber isolator, a first pump light source, a first beam combiner, and a first erbium-ytterbium co-doped fiber EYDF, wherein
the first fiber isolator is configured to transmit signal light from a signal light source to the first EYDF;
the first pump light source is configured to output first pump light;
the first beam combiner is configured to couple the first pump light to the first EYDF, wherein first ytterbium-band amplified spontaneous emission ASE light generated in the first EYDF is transmitted in a direction the same as and a direction opposite to a transmission direction of the signal light; and
the first fiber isolator is configured to reflect the first ytterbium-band ASE light back to the first EYDF.

2. The optical amplification apparatus according to claim 1, wherein the first fiber isolator comprises a first collimator, an isolator, a second collimator, and a reflection element, the first collimator and the second collimator are respectively located at two ends of the first fiber isolator, the first collimator is close to the signal light source, the second collimator is close to the first EYDF, the reflection element is located between the isolator and the second collimator, and the reflection element is configured to reflect the first ytterbium-band ASE light back to the first EYDF.

3. The optical amplification apparatus according to claim 2, wherein the reflection element is a reflection film located on an end surface of the second collimator, or the reflection element is a reflection film located on an end surface of the isolator.

4. The optical amplification apparatus according to claim 2, wherein the reflection element is a dielectric mirror located between the isolator and the second collimator.

5. The optical amplification apparatus according to any one of claims 2 to 4, wherein the reflection element is configured to reflect light whose wavelength is less than a wavelength of the signal light.

6. The optical amplification apparatus according to any one of claims 1 to 5, wherein the first beam combiner is located between the first fiber isolator and the first EYDF, and a transmission direction of the first pump light is the same as the transmission direction of the signal light.

7. The optical amplification apparatus according to claim 6, wherein first pump light that is not completely absorbed by the first EYDF is reflected back to the first EYDF through film coating on a side that is of the first EYDF and that is away from the first beam combiner.

8. The optical amplification apparatus according to any one of claims 1 to 5, wherein the first beam combiner is connected to a side that is of the first EYDF and that is away from the first fiber isolator, and a transmission direction of the first pump light is opposite to the transmission direction of the signal light.

9. The optical amplification apparatus according to claim 8, wherein the first fiber isolator is further configured to suppress transmission of the first pump light to the signal light source.

10. The optical amplification apparatus according to any one of claims 1 to 9, wherein the optical amplification apparatus further comprises a second fiber isolator, a second pump light source, a second beam combiner, and a second EYDF, and the signal light from the first EYDF is transmitted to the second EYDF through the second fiber isolator;
the second pump light source is configured to output second pump light;
the second beam combiner is configured to couple the second pump light to the second EYDF, wherein second ASE light generated in the second EYDF is transmitted in the direction the same as and the direction opposite to the transmission direction of the signal light; and
the second fiber isolator is configured to reflect the second ytterbium-band ASE light back to the second EYDF.

11. The optical amplification apparatus according to any one of claims 1 to 10, wherein the first EYDF comprises an outer cladding, an inner cladding, and a fiber core, the outer cladding wraps the inner cladding, the inner cladding wraps the fiber core, the signal light and the first ytterbium-band ASE light are transmitted in the fiber core, and the first pump light is transmitted in the inner cladding.

12. The optical amplification apparatus according to any one of claims 1 to 11, wherein the wavelength of the signal light is greater than a wavelength of the first ytterbium-band ASE light, and the wavelength of the first ytterbium-band ASE light is greater than a wavelength of the first pump light.

13. An optical amplification system, comprising the optical amplification apparatus according to any one of claims 1 to 12, a signal light source, and a first lens group, wherein
the signal light source is configured to output signal light;
the optical amplification apparatus is configured to amplify the signal light; and
the first lens group is configured to collimate signal light from an erbium-ytterbium co-doped fiber EYDF in the optical amplification apparatus.

14. The optical amplification system according to claim 13, wherein the optical amplification system further comprises a second lens group; and
the second lens group is configured to perform beam expansion, beam splitting, and/or beam combination on signal light that passes through the first lens group.

15. A radar system, comprising the optical amplification apparatus according to any one of claims 1 to 12, a signal light source, and an optical receiving apparatus, wherein
the signal light source is configured to output signal light;
the optical amplification apparatus is configured to amplify the signal light and transmit the signal light to a target object; and
the optical receiving apparatus is configured to receive signal light reflected by the target object.

16. An optical amplification method, wherein the optical amplification method is applied to an optical amplification apparatus, the optical amplification apparatus comprises a first fiber isolator, a first pump light source, a first beam combiner, and a first erbium-ytterbium co-doped fiber EYDF, and the optical amplification method comprises:
transmitting signal light from a signal light source to the first EYDF through the first fiber isolator;
outputting first pump light through the first pump light source;
coupling the first pump light to the first EYDF through the first beam combiner, wherein first ytterbium-band amplified spontaneous emission ASE light generated in the first EYDF is transmitted in directions that are the same as opposite to a transmission direction of the signal light; and
reflecting the first ytterbium-band ASE light back to the first EYDF through the first fiber isolator.

17. The method according to claim 16, wherein the first fiber isolator comprises a first collimator, an isolator, a second collimator, and a reflection element, the first collimator and the second collimator are respectively located at two ends of the first fiber isolator, the first collimator is close to the signal light source, the second collimator is close to the first EYDF, the reflection element is located between the isolator and the second collimator, and reflecting the first ytterbium-band ASE light back to the first EYDF through the first fiber isolator comprises:
reflecting the first ytterbium-band ASE light back to the first EYDF through the reflection element.

18. The method according to claim 17, wherein the first reflection element is a reflection film located on an end surface of the second collimator, or the first reflection element is a reflection film located on an end surface of the isolator.
